# EUROPÄISCHE PATENTSCHRIFT

(11) **EP 2 952 571 B1**
(45) Veröffentlichungstag und Bekanntmachung des Hinweises auf die Patenterteilung: **22.03.2017**
(21) Anmeldenummer: 15166259.0
(22) Anmeldetag: 04.05.2015
(51) Int. Cl.: C12C 7/17, C12C 7/14

(54) **VERFAHREN UND LÄUTERBOTTICH ZUM ABLÄUTERN VON WÜRZE**
METHOD AND REFINING BARREL FOR Lautering WORT
PROCÉDÉ ET CUVE DE CLARIFICATION POUR DÉCANTATION DE MOÛT

(30) Priorität: 06.06.2014 DE 102014108011
(43) Veröffentlichungstag der Anmeldung: 09.12.2015
(73) Patentinhaber: GEA BREWERY SYSTEMS GMBH, 97318 Kitzingen (DE)
(72) Erfinder: Bahns, Patrick, 97318 Kitzingen (DE); Gerner, Matthias, 97318 Kitzingen (DE)
(74) Vertreter: advotec.

(56) Entgegenhaltungen:
- EP-A1- 1 683 854
- EP-A1- 2 404 990
- WO-A1-92/08782
- DE-A1- 4 344 330
- DE-A1-102009 039 258

## Beschreibung

Die Erfindung betrifft ein Verfahren zum Abläutern von Würze mit einem Läuterbottich. Weiter betrifft die Erfindung einen Läuterbottich, der zur Durchführung des erfindungsgemäßen Verfahrens geeignet ist.

Bei der Bierherstellung oder der Herstellung anderer Produkte aus Cerealien, wie z.B. Whiskey, Kwass, Malzextrakt usw., stellt das Abläutern der Würze einen der wichtigsten Produktionsschritte dar. Während des Abläuterns wird der in der Maische enthaltene Treber abgefiltert, so dass man als Zwischenprodukt eine im Wesentlichen feststofffreie, wässrige Lösung der Extraktstoffe, nämlich die Würze, erhält.

Wenn im Weiteren von der Bierherstellung gesprochen wird, sind damit alle Prozesse, die einen Läuterbottich verwenden, gemeint. Die weitere Beschreibung erfolgt am Beispiel der Bierherstellung.

In klassischen Sudhausanlagen wird zum Abläutern ein Läuterbottich verwendet. Um die Filtration der Maische durchführen zu können, ist im Läuterbottich oberhalb des Bottichbodens ein so genannter Senkboden angebracht, der Durchtrittsöffnungen zum Ablaufen der Würze aufweist. Nach dem Abmaischen der Maische im Läuterbottich bildet sich auf dem Senkboden eine vom Treber gebildete Filtrationsschicht, mit der die in der Maische enthaltenen Feststoffe abgefiltert und von der Würze getrennt werden können. Der Treber verbleibt als Feststoff im Läuterbottich, wohingegen die Würze durch den Senkboden nach unten abfließt und als Zwischenprodukt aus dem Läuterbottich abgeleitet wird. Bei klassischen Brauverfahren, wie sie beispielsweise in dem Fachbuch "Technologie Brauer und Mälzer" von Wolfgang Kunze beschrieben werden, wird vorgeschrieben, dass vor dem Abmaischen, d.h. vor dem Einpumpen der Maische in den Läuterbottich, eine so genannte Senkbodenvorlage in den Läuterbottich eingepumpt werden muss. Als klassische Senkbodenvorlage wird dabei Wasser, meist Heißwasser, eingesetzt. Diese flüssige Senkbodenvorlage verdrängt vor dem Abmaischen die Luft aus dem Zwischenraum zwischen dem Behälterboden des Läuterbottichs und dem Senkboden. Außerdem kann durch die flüssige Senkbodenvorlage auch die Luft aus den vom Läuterbottichboden ausgehenden Würzesammelrohren und/oder aus dem am Ende der Würzesammelrohre angebrachten Würzesammelgefäß bzw. dem Würzesammelring verdrängt werden. Die Verdrängung der Luft aus dem Läuterbottich durch die Senkbodenvorlage soll dazu dienen, die Einbringung von Luftsauerstoff in die ablaufende Würze zu verhindern. Denn die Eigenschaften der Würze werden durch den Eintrag von Sauerstoff verschlechtert. Weiterhin belegen die Lufteinschlüsse die Öffnungen des Senkbodens, womit die Filtration behindert wird.

Nachteilig an der Einbringung von Wasser als Senkbodenvorlage in den Läuterbottich ist es, dass durch das Wasser der Senkbodenvorlage die Konzentration der Würze verdünnt wird. Je nach Art des herzustellenden Bieres muss das zusätzlich in die Würze eingebrachte Wasser später beim Würzekochen ausgedampft werden, was erhebliche Energiekosten verursacht.

Zur Verringerung des negativen Effekts auf die Würzekonzentration durch die Einbringung von reinem Wasser als Senkbodenvorlage in den Läuterbottich schlägt die DE 10 2010 030 954 A1 die Einbringung eines im Rahmen des Brauprozesses an anderer Stelle erhaltenen wässrigen Mediums als Senkbodenvorlage vor. Bei diesem wässrigen Medium kann es sich insbesondere um das Ausschubwasser zum Ausschieben von Maische aus der Maischeleitung zum Läuterbottich handeln. Da das Ausschubwasser selber Restextrakt enthält, wird die Würzekonzentration nicht so stark vermindert, wie es bei der Verwendung von reinem Wasser als Senkbodenvorlage der Fall ist. Aber auch hier kann ein negativer Effekt auf die Würzekonzentration nicht vollständig vermieden werden. Die DE 10 2010 030 954 A1 schlägt zur Vermeidung des negativen Effekts auf die Würzekonzentration die Verwendung eines zur Reinigung des Läuterbottichs vorgesehenen wässrigen Mediums als Senkbodenvorlage vor, da auch dieses Medium Extrakt enthält und somit der unerwünschte Effekt der Konzentrationsabsenkung zumindest verringert wird.

Die WO 92/08782 offenbart ein Läuterverfahren unter Einleitung von Inertgas. Alle bekannten Läuterbottiche und Verfahren zum Betrieb von Läuterbottichen gehen von der Verwendung von flüssigen Senkbodenvorlagen auf Wasserbasis aus. Im Ergebnis führt dies jedoch dazu, dass durch die flüssige Senkbodenvorlage immer ein zusätzliches Maß an Wasser in die abgeläuterte Würze eingemischt wird, was in vielen Fällen unerwünscht ist. Die bekannten Läuterbottiche zur Reduktion dieses Effekts erfordern außerdem einen erheblichen zusätzlichen Installationsaufwand.
Aufgabe der vorliegenden Erfindung ist es deshalb, ein neues Läuterverfahren und einen neuen Läuterbottich vorzuschlagen, mit dem die unerwünschte Absenkung der Würzekonzentration durch die wässrige Senkbodenvorlage vermieden wird.
Grundgedanke des erfindungsgemäßen Verfahrens ist es, dass die wässrige Senkbodenvorlage durch eine gasförmige Senkbodenvorlage ersetzt wird. Durch Einsatz eines gasförmigen Mediums als Senkbodenvorlage wird nämlich die Einmischung von zusätzlichem Wasser in die durch den Senkboden ablaufende Würze komplett vermieden. Statt den Bereich unterhalb des Senkbodens vor dem Abmaischen mit einem wässrigen Medium zu fluten, wird beim erfindungsgemäßen Verfahren ein gasförmiges Medium in diesen Bereich eingebracht. In welcher Weise die Einbringung dabei vorgenommen wird, ist ohne Belang. Es kann sich um die aktive Einbringung eines gasförmigen Mediums handeln, oder aber das gasförmige Medium strömt ohne aktive Maßnahmen von sich aus in den Bereich unterhalb des Senkbodens ein. Dies kann beispielsweise dadurch geschehen, dass die Würze eines vorhergehenden Sudes abgepumpt wird und der Bereich unterhalb des Senkbodens dadurch mit Luft aus der Umgebung belüftet wird. Ausschlaggebend für das erfindungsgemäße Verfahren ist es, dass vor dem Abmaischen des nächsten Sudes im Bereich unterhalb des Senkbodens eine gasförmige Senkbodenvorlage statt einer flüssigen Senkbodenvorlage vorhanden ist. Läuft nun die Würze nach dem Abmaischen durch den Senkboden nach unten ab, ist eine Verdünnung der Würze ausgeschlossen, da sich die gasförmige Senkbodenvorlage nicht dauerhaft in die flüssige Würze einmischen lässt.

Welche Bereiche des Läuterbottichs unterhalb des Senkbodens von der gasförmigen Senkbodenvorlage vor dem Abmaischen ausgefüllt werden, ist grundsätzlich beliebig. Bevorzugt sollte die gasförmige Senkbodenvorlage vor dem Abmaischen den Zwischenraum zwischen der Unterseite des Senkbodens und der Oberseite des Läuterbottichbodens und/oder die vom Läuterbottichboden ausgehenden Würzesammelrohre und/oder das am Ende der Würzesammelrohre angebrachte Würzesammelgefäß ausfüllen. Aber selbstverständlich ist auch die Ausfüllung anderer Bereiche entlang des Ablaufwegs der Würze nach dem Abläutern durch den Senkboden mittels einer gasförmigen Senkbodenvorlage problemlos möglich.

In der einfachsten Form kann als gasförmige Senkbodenvorlage Luft verwendet werden. Wird jedoch falsch abgemaischt, kann durch das falsche Abmaischen, beispielsweise bei zu schneller Abmaischgeschwindigkeit durch zu weit oberhalb des Senkbodens (z. B. im Bereich der Haube des Läuterbottichs) angebrachte Abmaischöffnungen, eine größere Menge Luftsauerstoff durch die Würze eingeschlossen werden, so dass der Luftsauerstoff in der gasförmigen Senkbodenvorlage einen zumindest geringfügigen negativen Effekt auf die Eigenschaften der Würze hat. Zur Vermeidung dieses negativen Effekts des Luftsauerstoffs auf die Würzeeigenschaften kann als gasförmige Senkbodenvorlage auch ein von Sauerstoff freies Gas, insbesondere ein Inertgas (z.B. Stickstoff) oder Kohlendioxidgas, verwendet werden. Werden diese sauerstofffreien Gase teilweise von der Würze eingeschlossen, ist ein negativer Einfluss auf die Eigenschaften der Würze ausgeschlossen, da die gasförmige Senkbodenvorlage keinen Sauerstoff enthält und somit keine Oxidation der Würzebestandteile zu befürchten ist.

Sauerstofffreie Gase können z.B. durch entsprechende Aufbereitungsmethoden (z.B. Molekularsiebe) aus der Luft gewonnen werden. Kohlendioxid ist besonders vorteilhaft, da es in jeder Brauerei in großer Menge bei der Gärung anfällt und damit leicht verfügbar ist.

Die Verwendung eines sauerstofffreien Gases als gasförmige Senkbodenvorlage verursacht allerdings gewisse Zusatzkosten für die Bereitstellung des entsprechenden Gasvolumens. Diese Kosten können vermieden werden, wenn als gasförmige Senkbodenvorlage Luft eingesetzt wird. Um die negativen Eigenschaften des in der Luft enthaltenen Sauerstoffs auf die Würze zu vermeiden, kann eine Vielzahl von Maßnahmen, insbesondere beim Abmaischen, getroffen werden, die den Einschluss der Luft in der Maische bzw. in der Würze verringern bzw. gänzlich vermeiden.

Der Einschluss von Teilen der gasförmigen Senkbodenvorlage in der Würze kann insbesondere dadurch verhindert werden, dass die Maische beim Abmaischen nicht von oben aus an der Decke des Läuterbottichs angebrachten Abmaischöffnungen auf den Senkboden fällt, sondern in bekannter Weise von unten durch im Senkboden angebrachte, verschließbare Maischezulauföffnungen in den Läuterbottich eingefördert wird. Auch ein Einbringen durch seitlich in der Gefäßwand, knapp oberhalb des Senkbodens angebrachte Maischezulauföffnungen ist bekannt. Durch den kontrollierten Zulauf der Maische durch die im Senkboden angebrachten Maischezulauföffnungen wird erreicht, dass die in der Maische enthaltene Würze kontrolliert und mit gemäßigter Fließgeschwindigkeit durch den Senkboden nach unten abfließt und dabei schrittweise die gasförmige Senkbodenvorlage, insbesondere wenn es sich dabei um Luft handelt, aus dem Bereich des Läuterbottichs unterhalb des Senkbodens verdrängt. Da beim Einpumpen der Maische durch die im Senkboden angebrachten Maischezulauföffnungen ein vollständiges Bedecken aller Öffnungen des Senkbodens, insbesondere am Beginn des Abmaischens, mit Maische ausgeschlossen ist, kann die gasförmige Senkbodenvorlage durch die gemäßigt nach unten abfließende Würze schrittweise nach oben durch die noch verbleibenden Öffnungen des Senkbodens verdrängt werden. Dies ist möglich, da sich die Maische zuerst um die Maischezulauföffnungen ansammelt und erst im weiteren Verlauf des Abmaischens den gesamten Senkboden überflutet. Erst wenn die gesamte gasförmige Senkbodenvorlage vollständig verdrängt ist, steigt das Niveau der Würze über die gesamte Fläche des Senkbodens so weit an, dass alle Durchgangsöffnungen des Senkbodens durch die Würze bedeckt werden. Dies ist dann aber im Hinblick auf die Verdrängung der Senkbodenvorlage nicht mehr von Bedeutung, da die gasförmige Senkbodenvorlage ohnehin bereits vollständig durch den Senkboden nach oben verdrängt wurde.

Im Hinblick auf die vollständige Verdrängung der gasförmigen Senkbodenvorlage durch die Öffnungen des Senkbodens ist es weiterhin von Vorteil, wenn die Maische zumindest zeitweise durch die verschiedenen Maischezulauföffnungen mit unterschiedlichen Fördergeschwindigkeiten in den Läuterbottich eingefördert wird. Im Ergebnis kann dadurch erreicht werden, dass die Maische auf einer Seite des Läuterbottichs schneller zuläuft als auf der anderen Seite. In den Bereichen, in denen die Maische schneller zuläuft, läuft die Würze auch schneller durch den Senkboden ab und verdrängt die gasförmige Senkbodenvorlage. In den Bereichen, in denen die Maische nur sehr langsam oder überhaupt nicht zugefördert wird, fließt dagegen nur wenig Würze oder überhaupt keine Würze ab, so dass gewährleistet ist, dass die zum Durchtritt der gasförmigen Senkbodenvorlage nach oben notwendigen Öffnungen im Senkboden bzw. entlang der Würzeablaufrohre nicht durch die ablaufende Würze versperrt werden. Diese Verfahrensvariante bedeutet also mit anderen Worten, dass die gasförmige Senkbodenvorlage durch die in Bezug auf die Senkbodenfläche anfangs ungleichmäßig abgemaischte Maische in eine bestimmte Vorzugsrichtung nach oben durch den Senkboden oder eine andere, beispielsweise speziell zum Ableiten der gasförmigen Senkbodenvorlage vorgesehene Öffnung abfließt.

Um unterschiedliche Fördergeschwindigkeiten an den verschiedenen Maischezulauföffnungen zu erreichen, können eine oder mehrere Maischezulauföffnungen zumindest zeitweise geschlossen oder gedrosselt werden. Durch die geschlossenen oder gedrosselten Maischezulauföffnungen kann keine oder weniger Maische in den Läuterbottich eingefördert werden und in den entsprechenden Bereichen um diese Maischezulauföffnungen deshalb auch keine Würze nach unten abfließen. Durch diese Bereiche kann dann die gasförmige Senkbodenvorlage bevorzugt nach oben verdrängt werden.

Um eine gleichmäßige Ausbildung des Treberkuchens oberhalb des Senkboden zu ermöglichen, sollte die Fördergeschwindigkeit der Maische in den verschiedenen Maischezulauföffnungen nach der Verdrängung der gasförmigen Senkbodenvorlage durch die ablaufende Würze angeglichen werden. Dies kann beispielsweise dadurch geschehen, dass die insgesamt bereits in den Läuterbottich durch eine oder mehrere der nicht verschlossenen Maischezulauföffnungen eingeförderte Maischemenge registriert wird. Sobald das Volumen des flüssigen Anteils der zugeförderten Maische dem Volumen der gasförmigen Senkbodenvorlage entspricht, kann davon ausgegangen werden, dass die gasförmige Senkbodenvorlage im Wesentlichen vollständig verdrängt ist. Ab diesem Zeitpunkt kann dann die Fördergeschwindigkeit in allen Maischezulauföffnungen angeglichen werden, wozu beispielsweise dann alle Maischezulauföffnungen in gleicher Weise geöffnet werden.

Eine weitere Maßnahme zur Vermeidung von unerwünschten Gaspolstern in der Senkbodenvorlage ist es, dass die Würze jedenfalls bis zu dem Zeitpunkt, an dem die gasförmige Senkbodenvorlage vollständig verdrängt ist, nur mit einer relativ geringen Förderleistung in den Läuterbottich eingefördert wird. Durch die geringe Förderleistung ist gewährleistet, dass die Würze nur relativ langsam durch den Senkboden abfließt und dadurch nicht gleichzeitig alle Öffnungen im Senkboden bzw. nicht alle Querschnitte in den Würzeablaufrohren durch die ablaufende Würze versperrt werden. Die geringere Förderleistung kann durch einen Frequenzumformer am Motor der Pumpe oder ein nach der Pumpe installiertes Regelorgan einfach erreicht werden. Denkbar ist auch eine zusätzliche Pumpe mit geringerer Förderleistung, die nur zum Beginn des Abmaischens benutzt wird. Sobald die gasförmige Senkbodenvorlage dann vollständig verdrängt ist, kann die Förderleistung beim Abmaischen problemlos erhöht werden, da der Einschluss unerwünschter Gaspolster dann nicht mehr zu befürchten ist.

Um Verunreinigungen im Bereich der Senkbodenvorlage durch in der Maische enthaltene Feststoffe zu vermeiden bzw. zu verringern, ist es vorteilhaft, wenn zu Beginn des Abmaischens eine feststoffarme Fraktion der Maische in den Läuterbottich gepumpt wird. Außerdem kann so die Senkbodenvorlage besonders schnell erfolgen, da diese Flüssigkeit besonders schnell durch den Senkboden abfließt und die gasförmige Senkbodenvorlage verdrängt. Nach der vollständigen Verdrängung der gasförmigen Senkbodenvorlage durch die Würze kann dann der gesamte Rest der abzumaischenden Maische mit allen Feststoffen in den Läuterbottich gepumpt werden. Um eine feststoffarme Fraktion der Maische zu erhalten, kann beispielsweise zu Beginn des Abmaischens Maische aus einem oberen Bereich des Maischgefäßes entnommen werden, da sich die Feststoffe am Boden des Maischgefäßes konzentrieren, wenn man beispielsweise die Drehzahl des Rührwerkes reduziert oder es sogar ausschaltet.

Um die Einmischung von unerwünschtem Wasser in die Würze weiter zu verringern, ist es weiterhin möglich, dass die Abmaischleitung, durch die die Maische in den Läuterbottich eingefördert wird, am Ende des Abmaischens nicht wie üblich mit einem wässrigen Medium, sondern mit einem gasförmigen Druckmedium ausgeschoben wird. Beispielsweise kann die Abmaischleitung mit Druckluft, CO₂ oder anderen Gasen (z.B. Inertgasen) ausgeschoben werden. Natürlich könnte auch einfach die Wassermenge in der Abmaischleitung verworfen werden. Dies ist aber aus ökologischen und ökonomischen Gründen nicht sinnvoll.

Der erfindungsgemäße Läuterbottich ist durch eine zusätzliche Entgasungsleitung charakterisiert, die mit einem ersten Ende unterhalb des Senkbodens in den Läuterbottich mündet. Durch diese zusätzliche Entgasungsleitung kann das Verdrängen der gasförmigen Senkbodenvorlage durch die nach unten ablaufende Würze erleichtert werden. Denn durch den zusätzlichen Querschnitt der Entgasungsleitung besteht für die gasförmige Senkbodenvorlage eine zusätzliche Möglichkeit, aus dem Läuterbottich herauszuströmen. Selbst beim Verschluss aller Öffnungen im Senkboden selbst kann die gasförmige Senkbodenvorlage durch die Entgasungsleitung aus dem Bereich des Läuterbottichs unterhalb des Senkbodens abgeführt werden.

An welcher Stelle das erste Ende der Entgasungsleitung in den Bereich unterhalb des Senkbodens in den Läuterbottich mündet, ist grundsätzlich beliebig. Besonders vorteilhaft ist das erste Ende der Entgasungsleitung derart angebracht, dass die gasförmige Senkbodenvorlage aus dem Zwischenraum zwischen dem Senkboden und dem Läuterbottichboden und/oder aus zumindest einem Würzesammelrohr abfließen kann. Besonders vorteilhaft ist es auch, wenn mehrere Entgasungsleitungen über den Umfang des Läuterbottichs verteilt und mit dem Bereich zwischen Senkboden und Läuterbottichboden verbunden werden.

Um den Eintritt von in der ablaufenden Würze enthaltenen Feststoffen in die Entgasungsleitung zu verhindern und dadurch unerwünschte Verunreinigungen in der Entgasungsleitung zu vermeiden, ist es besonders vorteilhaft, wenn in der Entgasungsleitung ein Sieb oder Filterelement angeordnet ist. Durch dieses Sieb oder Filterelement können die in der Würze enthaltenen Feststoffpartikel zumindest teilweise zurückgehalten werden. Die zum ersten Ende der Entgasungsleitung weisende Seite des Siebes oder Filterelementes sollte dabei derart angebracht werden, dass sie gut gereinigt werden kann. Weiterhin kann die mindestens eine Entgasungsleitung auch mit einer Absperrarmatur ausgestattet sein, die ein Absperren der mindestens einen Leitung ermöglicht.

Wohin die gasförmige Senkbodenvorlage durch die Entgasungsleitung abgeleitet wird, ist grundsätzlich beliebig. Besonders vorteilhaft ist es, wenn diese gasförmige Senkbodenvorlage von der Würze durch die Entgasungsleitung in den Läuterbottich oberhalb des Senkbodens verdrängt wird. Dazu wird das zweite Ende der Entgasungsleitung derart am Läuterbottich angebracht, dass es oberhalb des Senkbodens in den Läuterbottich mündet.

Eine Ausführungsform der Erfindung ist in den Zeichnungen schematisch dargestellt und wird nachfolgend beispielhaft erläutert.

Es zeigen:
- Fig. 1: eine Sudhausanlage mit erfindungsgemäßem Läuterbottich in schematisierter Ansicht;
- Fig. 2: den Läuterbottich der Sudhausanlage gemäß Fig. 1 im vergrößerten Querschnitt in einer schematisierten Ansicht;
- Fig. 3: einen vergrößerten Ausschnitt des Läuterbottichs gemäß Fig. 2 im Querschnitt in einer schematisierten Ansicht.

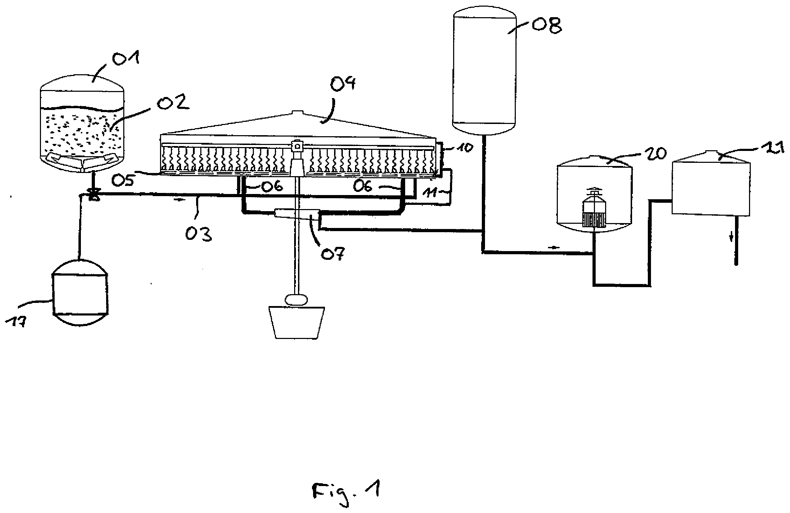

Fig. 1 zeigt eine Sudhausanlage zur Bierwürzeherstellung in einer schematisierten Ansicht. In einem Maischgefäß 01 kann die Maische 02 in bekannter Weise hergestellt, verzuckert und anschließend durch eine Abmaischleitung 03 in einen Läuterbottich 04 eingepumpt werden.

Beim Abläutern der Maische 02 fließen die flüssigen Bestandteile der Maische 02 durch den Senkboden 05 des Läuterbottichs 04 nach unten ab. Durch am Läuterbottichboden einmündende Würzesammelrohre 06 fließt die Würze dann in ein Würzesammelgefäß 07 bzw. einen Würzesammelring. Von dort kann die Würze mittels nicht dargestellter Pumpen in einen Würzepuffertank 08 oder direkt in eine Würzepfanne 20 zur Würzekochung eingepumpt werden. Aus der Würzepfanne 20 gelangt die gekochte Würze dann in einen Whirlpool 21, wo die Trubbestandteile aus der Würze abgeschieden werden können.

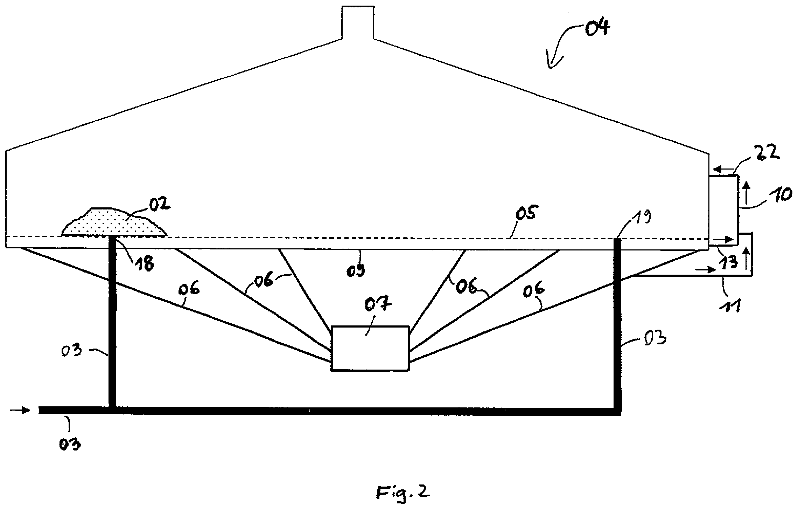

Die Erfindung soll anhand der Darstellung des Läuterbottichs 04 in Fig. 2 kurz erläutert werden. Fig. 2 zeigt den Läuterbottich 04 kurz nach Beginn des Abmaischens. Zu Beginn des Abmaischens ist die rechte Maischezulauföffnung 19 an einem Ende der Abmaischleitung 03 vollständig geschlossen. Die linke Maischezulauföffnung 18 ist vollständig geöffnet, und die Maische 02 wird mit zunächst relativ geringer Geschwindigkeit durch die Maischezulauföffnung 18 von unten durch den Senkboden 05 in den Bereich oberhalb des Senkbodens 05 in den Läuterbottich 04 eingepumpt. Die in der Maische 02 enthaltenen flüssigen Bestandteile, nämlich die Würze, fließen dabei durch die Öffnungen des Senkbodens 05 im Bereich um die Maischezulauföffnung 18 nach unten ab. Die gasförmige Senkbodenvorlage, die vor Beginn des Abmaischens den gesamten Zwischenraum zwischen der Unterseite des Senkbodens 05 und der Oberseite des Läuterbottichbodens 09, und alle Würzesammelrohre 06 und das Würzesammelgefäß 07 ausgefüllt hat, wird nun beginnend von der linken Seite des Läuterbottichs 04 durch die im Bereich der Maischezulauföffnung 18 nach unten abfließende Würze nach rechts verdrängt. Da die Würze zunächst nur im linken Bereich des Läuterbottichs nach unten abfließt, sind die Öffnungen im Senkboden 05 im rechten Bereich des Läuterbottichs 04 noch nicht durch Flüssigkeit versperrt, und die gasförmige Senkbodenvorlage kann problemlos von unten durch die Öffnungen des Senkbodens 05 nach oben ausströmen.

Je mehr Maische bereits in den Läuterbottich 04 eingepumpt wurde, desto höher ist die Wahrscheinlichkeit, dass alle Spaltöffnungen im Senkboden 05 bereits durch die Flüssigkeit versperrt sind. Um auch dann noch zuverlässig ein Ausströmen der gasförmigen Senkbodenvorlage zu gewährleisten, sind am Läuterbottich 04 mehrere Entgasungsleitungen 10 und 11 vorgesehen. Die Entgasungsleitungen 10 münden mit ihrem ersten Ende 13 im Zwischenraum zwischen der Unterseite des Senkbodens 05 und der Oberseite des Läuterbottichbodens 09. Die Entgasungsleitungen 11 münden mit ihrem ersten Ende jeweils an einem der Würzesammelrohre 06. Durch die Entgasungsleitungen 10 und 11 kann die gasförmige Senkbodenvorlage aus dem Bereich unterhalb des Senkbodens 05 verdrängt werden.

Das zweite Ende 22 der Entgasungsleitung 10 mündet oberhalb des Flüssigkeitspiegels und oberhalb des Senkbodens 05 in den Läuterbottich 04. Die zweiten Enden der Entgasungsleitungen 11 ihrerseits münden in die Entgasungsleitung 10. Auf diese Weise kann gewährleistet werden, dass die gesamte gasförmige Senkbodenvorlage, die durch die Entgasungsleitungen 10 und 11 verdrängt wird, zurück in den Läuterbottich oberhalb des Senkbodens 05 gelangt. Ein Austritt von flüssigen oder gasförmigen Medien durch die Entgasungsleitungen 10 und 11 aus dem Läuterbottich 04 heraus ist somit zuverlässig ausgeschlossen.

Sobald der gesamte Zwischenraum zwischen dem Senkboden 05 und dem Läuterbottichboden 09, alle Würzesammelrohre 06 und das vollständige Würzesammelgefäß 07 mit Würze geflutet sind, wird auch die zweite Maischezulauföffnung 19 geöffnet und die Maische mit erhöhter Förderleistung in den Läuterbottich eingefördert.

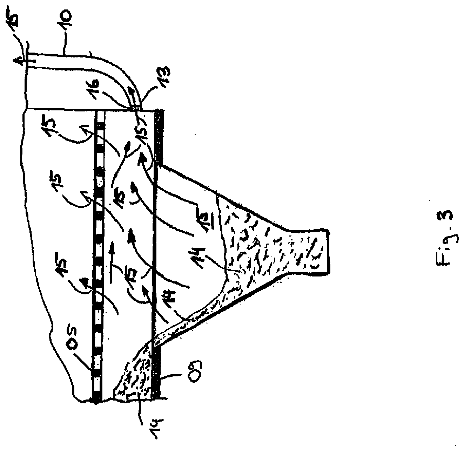

Fig. 3 zeigt noch einmal schematisch das Prinzip der Erfindung bei der Verdrängung der gasförmigen Senkbodenvorlage aus dem Läuterbottich unterhalb des Senkbodens 05. Fig. 3 zeigt dabei den Ausschnitt des Läuterbottichs 04 im Bereich des ersten Endes 13 der Entgasungsleitung 10. Durch die relativ geringe Abmaischleistung zu Beginn des Abmaischens und durch das einseitige Öffnen der Maischezulauföffnungen wird eine kontrollierte gerichtete Flüssigkeitsströmung der durch den Senkboden 05 abgelaufenen Würze 14 erzeugt.

Durch den kontrollierten Zulauf der Würze 14 wird die gasförmige Senkbodenvorlage 15 nacheinander aus dem gesamten Bereich unterhalb des Senkbodens 05 durch die Entgasungsleitungen 10 und 11 und durch die noch nicht von Flüssigkeit überdeckten Öffnungen des Senkbodens 05 verdrängt. Der Einschluss von unerwünschten Gaspolstern im Volumen der Würze 14 wird somit weitgehend vermieden. Der Eintrag von Sauerstoff in die Würze 14 bleibt somit vernachlässigbar. Sobald die gasförmige Senkbodenvorlage vollständig verdrängt ist und der Bereich unterhalb des Senkbodens 05 vollständig von der Würze 14 geflutet wurde, kann das Abmaischen in konventioneller Weise mit den entsprechenden Abmaischparametern fortgesetzt werden. An den Enden der Entgasungsleitungen 10, die in den Läuterbottich 04 bzw. in die Würzesammelleitungen 06 oder in das Würzesammelgefäß 07 münden, sind jeweils Siebelemente 16 angebracht, die einen Durchtritt von Feststoffpartikeln nach der vollständigen Flutung mit Würze 14 verhindern.

Um eine Verdünnung der Würze auch dahingehend zu vermeiden, dass zum Ausschieben der Abmaischleitung 03 ein wässriges Medium benutzt wird, ist eine Druckluftquelle 17 vorgesehen. Als Druckluftquelle kann beispielsweise die für die Förderung der Treber in das Trebersilo vorhandene Quelle verwendet werden. Diese Quelle ist in bekannter Weise z. B. ein Gebläse oder ein Kompressor.

Über nicht weiter dargestellte Ventile kann die Druckluft aus der Druckluftquelle 17 in die Abmaischleitung 03 eingeleitet und dadurch die in der Maischeleitung 03 nach dem Abmaischen verbliebene Maische in den Läuterbottich eingefördert werden.

Es ist auch denkbar, die Entfernung der gasförmigen Senkbodenvorlage dadurch zu unterstützen, dass z. B. Vakuumpumpen oder andere Vorrichtungen zum Absaugen von Gasen unterstützend benutzt werden. Beispielsweise kann die mindestens eine Entgasungsleitung 10 oder 11 mit Vakuumpumpen ausgestattet werden. Somit kann die gasförmige Senkbodenvorlage schneller entfernt werden.

## Patentansprüche

1. Verfahren zum Abläutern von Würze (14) mit einem Läuterbottich (04), wobei vor dem Abläutern der Würze durch den Senkboden (05) ein fließfähiges Medium als Senkbodenvorlage unter dem Senkboden (05) des Läuterbottichs (04) eingebracht wird, und wobei nach der Einbringung der Senkbodenvorlage die Maische (02) in den Läuterbottich (04) über dem Senkboden (05) abgemaischt wird, und wobei die im Läuterbottich (04) durch den Senkboden (05) ablaufende Würze (14) die Senkbodenvorlage verdrängt,
**dadurch gekennzeichnet,**
**dass** als Senkbodenvorlage (15) ein gasförmiges Medium verwendet wird.

2. Verfahren nach Anspruch 1,
**dadurch gekennzeichnet,**
**dass** die gasförmige Senkbodenvorlage (15) vor dem Abmaischen den Zwischenraum zwischen dem Senkboden (05) und dem Läuterbottichboden (09) und/oder die vom Läuterbottichboden (09) ausgehenden Würzesammelrohre (06) und/oder das am Ende der Würzesammelrohre (06) angebrachte Würzesammelgefäß (07) und/oder den Würzesammelring ausfüllt.

3. Verfahren nach Anspruch 1 oder 2,
**dadurch gekennzeichnet,**
**dass** als gasförmige Senkbodenvorlage (15) ein von Sauerstoff freies Gas, insbesondere ein Inertgas oder Kohlendioxidgas, verwendet wird.

4. Verfahren nach einem der Ansprüche 1 bis 3,
**dadurch gekennzeichnet,**
**dass** die Maische (02) beim Abmaischen von unten durch mindestens eine im Senkboden (05) angebrachte verschließbare Maischezulauföffnung (18, 19) in den Läuterbottich (04) eingefördert wird.

5. Verfahren nach einem der Ansprüche 1 bis 4,
**dadurch gekennzeichnet,**
**dass** die Maische zumindest zeitweise durch die verschiedenen Maischezulauföffnungen (18, 19) mit unterschiedlichen Fördergeschwindigkeiten eingefördert wird.

6. Verfahren nach Anspruch 5,
**dadurch gekennzeichnet,**
**dass** zumindest zeitweise zumindest eine Maischezulauföffnung (19) geschlossen oder gedrosselt bleibt, um unterschiedliche Fördergeschwindigkeiten einzustellen.

7. Verfahren nach Anspruch 5 oder 6,
**dadurch gekennzeichnet,**
**dass** die Fördergeschwindigkeit in den verschiedenen Maischezulauföffnungen nach der im Wesentlichen vollständigen Verdrängung der gasförmigen Senkbodenvorlage (15) durch die ablaufende Würze (14) angeglichen wird.

8. Verfahren nach einem der Ansprüche 1 bis 7,
**dadurch gekennzeichnet,**
**dass** die Maische (02) während des Abmaischens ausgehend von einer Anfangsförderleistung mit sich zumindest einmal erhöhender Förderleistung in den Läuterbottich (04) eingefördert wird.

9. Verfahren nach Anspruch 8,
**dadurch gekennzeichnet,**
**dass** die Förderleistung beim Abmaischen nach der im Wesentlichen vollständigen Verdrängung der gasförmigen Senkbodenvorlage (15) erhöht wird.

10. Verfahren nach einem der Ansprüche 1 bis 9,
**dadurch gekennzeichnet,**
**dass** zu Beginn des Abmaischens eine feststoffarme Fraktion der Maische (02) in den Läuterbottich (04) gepumpt wird, bis die gasförmige Senkbodenvorlage (15) von der durch den Senkboden (05) ablaufenden Würze (14) im Wesentlichen vollständig verdrängt ist.

11. Verfahren nach einem der Ansprüche 1 bis 10,
**dadurch gekennzeichnet,**
**dass** die Abmaischleitung (03), durch die die Maische (02) in den Läuterbottich (04) eingefördert wird, am Ende des Abmaischens mit einem gasförmigen Druckmedium ausgeschoben wird.

12. Läuterbottich (04) zur Würzefiltration, mit einem Senkboden (05) zum Abläutern der Würze (14), und mit zumindest einer Maischezulauföffnung (18, 19), durch die die Maische (02) in den Läuterbottich (04) über dem Senkboden (05) abgemaischt werden kann,
**dadurch gekennzeichnet,**
**dass** unterhalb des Senkbodens (05) zumindest eine Entgasungsleitung (10, 11, 12) mit einem erste Ende (13) in den Läuterbottich (04) mündet, wobei beim Abmaischen der Maische (02) in den Läuterbottich (04) zumindest ein Teil einer gasförmigen Senkbodenvorlage (15) durch die Entgasungsleitung (10, 11, 12) verdrängt werden kann.

13. Läuterbottich nach Anspruch 12,
**dadurch gekennzeichnet,**
**dass** zumindest eine Entgasungsleitung (10, 11, 12) mit dem ersten Ende (13) in den Zwischenraum zwischen dem Senkboden (05) und dem Läuterbottichboden (09) und/oder in zumindest ein vom Läuterbottichboden (09) ausgehendes Würzesammelrohr (06) einmündet.

14. Läuterbottich nach Anspruch 12 oder 13,
**dadurch gekennzeichnet,**
**dass** an oder in der Entgasungsleitung (10, 11, 12) ein Siebelement (16) oder Filterelement und/oder eine Absperrarmatur angeordnet ist, mit dem/der in der Würze (14) noch enthaltene Feststoffpartikel zumindest teilweise zurückgehalten werden können.

15. Läuterbottich nach einem der Ansprüche 12 bis 14,
**dadurch gekennzeichnet,**
**dass** das zweite Ende der Entgasungsleitung (10, 11, 12) in den Läuterbottich (04) oberhalb des Senkbodens (05) einmündet.

## Claims

1. A method for lautering wort (14) using a lauter tun (04), a fluid medium being introduced as a false bottom seal beneath the false bottom (05) of the lauter tun (04) prior to lautering of the wort through the false bottom (05), and the mash (02) being transferred into the lauter tun (04) above the false bottom (05) after the introduction of the false bottom seal, and the wort (14) that runs off in the lauter tun (04) through the false bottom (05) displacing the false bottom seal,
**characterized in that**
a gaseous medium is used for the false bottom seal (15).

2. The method according to claim 1,
**characterized in that**
prior to the mash transfer, the gaseous false bottom seal (15) fills the space between the false bottom (05) and the bottom (09) of the lauter tun and/or the wort collection pipes (06) branching off from the bottom (09) of the lauter tun and/or the wort collection tank (07) arranged at the end of the wort collection pipes (06) and/or the wort collection ring.

3. The method according to claim 1 or 2,
**characterized in that**
a gas that is free of oxygen, in particular an inert gas or a carbon dioxide gas, is used for the gaseous false bottom seal (15).

4. The method according to any one of claims 1 to 3,
**characterized in that**
during the mash transfer, the mash (02) is conveyed from below into the lauter tun (04) through at least one closable mash inlet opening (18, 19) arranged in the false bottom (05).

5. The method according to any one of claims 1 to 4,
**characterized in that**
at least temporarily, the mash is conveyed in through the different mash inlet openings (18, 19) at different conveying speeds.

6. The method according to claim 5,
**characterized in that**
at least temporarily, at least one mash inlet opening (19) stays closed or throttled so as to adjust different conveying speeds.

7. The method according to claim 5 or 6,
**characterized in that**
the conveying speeds in the different mash inlet openings are equalized once the gaseous false bottom seal (15) has been substantially completely displaced by the wort (14) running off.

8. The method according to any one of claims 1 to 7,
**characterized in that**
during the mash transfer, the mash (02) is conveyed into the lauter tun (04) with a conveying capacity that increases at least once starting from an initial conveying capacity.

9. The method according to claim 8,
**characterized in that**
the conveying capacity during the mash transfer is increased once the gaseous false bottom seal (15) has been substantially completely displaced.

10. The method according to any one of claims 1 to 9,
**characterized in that**
at the beginning of the mash transfer, a fraction of the mash (02) having a low solid content is pumped into the lauter tun (04) until the gaseous false bottom seal (15) has been substantially completely displaced by the wort (14) running off through the false bottom (05).

11. The method according to any one of claims 1 to 10,
**characterized in that**
the mash transfer duct (03) through which the mash (02) is conveyed into the lauter tun (04) is evacuated by means of a gaseous pressure medium at the end of the mash transfer.

12. A lauter tun (04) for wort filtration comprising a false bottom (05) for lautering the wort (14) and comprising at least one mash inlet opening (18, 19) through which the mash (02) can be transferred into the lauter tun (04) above the false bottom (05),
**characterized in that**
below the false bottom (05), at least one degassing duct (10, 11, 12) ends with a first end (13) in the lauter tun (04), wherein at least part of a gaseous false bottom seal (15) can be displaced through the degassing duct (10, 11, 12) during the transfer of the mash (02) into the lauter tun (04).

13. The lauter tun according to claim 12,
**characterized in that**
at least one degassing duct (10, 11, 12) ends with the first end (13) in the space between the false bottom (05) and the bottom (09) of the lauter tun and/or in at least one wort collection pipe (06) branching off from the bottom (09) of the lauter tun.

14. The lauter tun according to claim 12 or 13,
**characterized in that**
a sieve element (16) or filter element and/or a shut-off valve are arranged on or within the degassing duct (10, 11, 12), by means of which solid particles still contained in the wort (14) can be held back at least in part.

15. The lauter tun according to any one of claims 12 to 14,
**characterized in that**
the second end of the degassing duct (10, 11, 12) ends in the lauter tun (04) above the false bottom (05).

## Revendications

1. Procédé de filtration de moût (14) utilisant une cuve de filtration (04), une substance fluide étant introduite comme liquide de blocage de faux fond sous le faux fond (05) de la cuve de filtration (04) avant la filtration du moût à travers le faux fond (05), et la trempe (02) étant transférée dans la cuve de filtration (04) au-dessus du faux fond (05) après l'introduction du liquide de blocage de faux fond, et le moût (14) qui s'écoule à travers le faux fond (05) dans la cuve de filtration (04) déplaçant le liquide de blocage de faux fond,
**caractérisé en ce qu'**
un fluide gazeux est utilisé comme liquide de blocage de faux fond (15).

2. Procédé selon la revendication 1,
**caractérisé en ce qu'**
avant le transfert de la trempe, le liquide de blocage de faux fond (15) gazeux remplit l'espace entre le faux fond (05) et le fond (09) de la cuve de filtration et/ou les tuyaux collecteurs de moût (06) émanant du fond (09) de la cuve de filtration et/ou le réservoir de moût (07) disposé à l'extrémité des tuyaux collecteurs (06) de moût et/ou l'anneau collecteur de moût.

3. Procédé selon la revendication 1 ou 2,
**caractérisé en ce qu'**
un gaz sans oxygène, notamment un gaz inerte ou un gaz de dioxyde de carbone, est utilisé comme fluide de blocage de faux fond (15) gazeux.

4. Procédé selon l'une quelconque des revendications 1 à 3,
**caractérisé en ce que**
lors du transfert de la trempe, la trempe (02) est transportée dans la cuve de filtration (04) par le bas à travers au moins un orifice d'afflux de trempe (18, 19) fermable disposé dans le faux fond (05).

5. Procédé selon l'une quelconque des revendications 1 à 4,
**caractérisé en ce que**
la trempe est transportée au moins temporairement à travers les orifices d'afflux de trempe (18, 19) différents à des vitesses de transport différentes.

6. Procédé selon la revendication 5,
**caractérisé en ce qu'**
au moins un orifice d'afflux de trempe (19) reste fermé ou réduit au moins temporairement afin d'ajuster des vitesses de transport différentes.

7. Procédé selon la revendication 5 or 6,
**caractérisé en ce que**
les vitesses de transport dans les orifices d'afflux de trempe différents sont équilibrées après le déplacement essentiellement complet du fluide de blocage de faux fond (15) gazeux par le moût (14) s'écoulant.

8. Procédé selon l'une quelconque des revendications 1 à 7,
**caractérisé en ce que**
lors du transfert de la trempe, la trempe (02) est transportée dans la cuve de filtration (04) à un débit qui augmente au moins une fois à partir d'un débit de sortie.

9. Procédé selon la revendication 8,
**caractérisé en ce que**
le débit lors de la filtration est augmenté après le déplacement essentiellement complet du fluide de blocage de faux fond (15) gazeux.

10. Procédé selon l'une quelconque des revendications 1 à 9,
**caractérisé en ce qu'**
au début du transfert de la trempe, une fraction pauvre en matières solides de la trempe (02) est pompée dans la cuve de filtration (04) jusqu'au déplacement essentiellement complet du fluide de blocage de faux fond (15) gazeux par le moût (14) s'écoulant à travers le faux fond (05).

11. Procédé selon l'une quelconque des revendications 1 à 10,
**caractérisé en ce que**
le conduit de transfert de la trempe (03) par lequel la trempe (02) est transportée dans la cuve de filtration (04) est évacué à l'aide d'un fluide de pression gazeux à la fin du transfert de la trempe.

12. Cuve de filtration (04) pour la filtration de moût, comprenant un faux fond (05) destiné à filtrer le moût (14), et comprenant au moins un orifice d'afflux de trempe (18, 19) par lequel la trempe (02) peut être transférée dans la cuve de filtration (04) au-dessus du faux fond (05),
**caractérisée en ce que**
sous le faux fond (05), une première extrémité (13) d'au moins un conduit de dégazage (10, 11, 12) débouche dans la cuve de filtration (04), au moins une partie d'un liquide de blocage de faux fond (15) gazeux pouvant être déplacée à travers le conduit de dégazage (10, 11, 12) lors du transfert de la trempe (02) dans la cuve de filtration (04).

13. Cuve de filtration selon la revendication 12,
**caractérisée en ce que**
la première extrémité (13) d'au moins un conduit de dégazage (10, 11, 12) débouche dans l'espace entre le faux fond (05) et le fond (09) de la cuve de filtration et/ou dans au moins un tuyau collecteur de moût (06) émanent du fond (09) de la cuve de filtration.

14. Cuve de filtration selon la revendication 12 ou 13,
**caractérisée en ce qu'**
un élément de tamis (16) ou un élément de filtrage et/out un robinet d'arrêt est disposé sur ou dans le conduit de dégazage (10, 11, 12), à l'aide duquel des particules solides encore contenues dans le moût (14) peuvent être retenues au moins en partie.

15. Cuve de filtration selon l'une quelconque des revendications 12 à 14,
**caractérisée en ce que**
la deuxième extrémité du conduit de dégazage (10, 11, 12) débouche dans la cuve de filtration (04) au-dessus du faux fond (05).
